# EUROPEAN PATENT SPECIFICATION

(11) **EP 1 957 245 B1**
(45) Date of publication and mention of the grant of the patent: **17.10.2012**
(21) Application number: 06829361.2
(22) Date of filing: 05.12.2006
(51) Int. Cl.: B28B 11/24, B28B 21/52, F26B 3/347, F26B 17/00, C04B 40/02

(54) **PROCESS FOR THE PRODUCTION AND FORM PRESERVATION OF AN EXTRUDED HOLLOW PRODUCT MADE OF CEMENTITIOUS MATERIAL**
VERFAHREN FÜR DIE HERSTELLUNG UND FORMERHALTUNG EINES AUS ZEMENT-MATERIAL HERGESTELLTEN HOHLEN EXTRUDATS
PROCEDE DE PRODUCTION ET DE CONSERVATION DE LA FORME D'UN PRODUIT CREUX EXTRUDE CONSTITUE D'UN MATERIAU CIMENTAIRE

(30) Priority: 09.12.2005 IT MI20052359
(43) Date of publication of application: 20.08.2008
(73) Proprietor: ITALCEMENTI S.p.A., 24121 Bergamo (IT)
(72) Inventor: GUERRINI, Gian Luca, I-20063 Cernusco sul Naviglio (Milano) (IT); ALFANI, Roberta, I-24128 Bergamo (IT)
(74) Representative: De Gregori, Antonella
(86) International application number: PCT/EP2006/011733
(87) International publication number: WO 2007/065668

(56) References cited:
- WO-A-93/20990
- DE-A1- 4 432 333
- US-A1- 2005 093 209

## Description

The present invention relates to a process for the production and form preservation of a hollow extruded product made of cementitious material.

The present invention relates to the field of extrusion processes of end-products made of cementitious material of any hollow form, for example, tubular, box-shaped with or without internal partitions, in accordance with the preamble of claim 1.

In particular, the present invention relates to a process for the production by extrusion of piping made of fibre-cement with a circular section and fine thickness.

Furthermore, the present invention allows the production of cementitious products, for applications in the building and industrial sector such as for example permanent formworks for pillars, channels and chimney flues, etc..

In the transportation of drinking water, irrigations and wastewater, various types of products or ducts are normally used, made of different kinds of materials such as: cementitious materials, plastic materials, concrete, ceramic stoneware and iron.

For these applications, the typical end-products used have a tubular form and are made of cementitious materials such as concrete reinforced with fibres, reinforced concrete, asbestos-cement and fibre-cement without asbestos.

Alternatively plastic materials are used such as polyvinylchloride (PVC), polyethylene (PE), polypropylene (PP) and glass-resin.

As far as the form of the end-products is concerned, those most commonly used, with a circular section, have found an increasingly wider market.

Cementitious end-products having different shapes are also available on the market, such as for example, tubular footrest or flat bottom pipes, elliptic or ovoidal pipes, rectangular end-products, or pipes with other sections specifically designed for favouring the maximum fluid flow in their interior.

In the case of pipes having a circular section, the diameters available can vary and are divided according to the various types of use.

Another important construction characteristic of cementitious end-products and in particular pipes consists in their thickness; those having a so-called "fine thickness", typically have a vacuum percentage of the section higher than 60%. A typical example is represented by pipes made of fibre-cement.

With respect to processes for the production of piping made of cementitious material, these have been known from the beginning of the last century.

In 1910, W.R. Hume described, in Australian patent 4843/2622, a process for the production of reinforced concrete pipes by means of centrifugation exploiting the centrifugal force. A cylindrical mould with a horizontal axis charged with concrete was rotated at a high velocity, with the removal of the excess water until a compact material was obtained. The so-called "Hume pipes" are still produced, still exploiting the technique based on centrifugation, optionally using reinforced concrete with steel fibres, or other compositions.

Another production technique used in the past is that called "Rotopress" or "Giropress" whereby pipes were produced in vertical, by a rotating mandrel which packed the concrete having a consistency of the humid earth type in an axial direction.

This system has now been substituted by other production technologies such as, for example, the vibrocompression technology, in which dry concrete is again used.

In this case, the pipe produced in vertical is immediately removed from the mould and sent to the curing phase.

With the type of production technologies so-far cited, pipes having relatively high thicknesses are obtained, which comply with the European regulation EN 1916 (reinforced concrete, non-reinforced concrete, concrete reinforced with steel fibres).

In addition to concrete pipes, pipes made of fibre-cement having a fine thickness are also known, mainly produced by means of the so-called Mazza process (deriving from the Hatschek technology). In this case, the material used par excellence, was asbestos-cement, recently substituted for environmental reasons by so-called fibre-cement. In the Mazza/Hatschek process, cementitious compositions are used, containing cement, process fibres and reinforcing fibres (both synthetic and natural) and other secondary additives. The products obtained have high mechanical characteristics, they are extremely compact and have low thicknesses.

More recently, the use of the extrusion technology has been proposed, widely used for plastic materials, metals, ceramics, ceramic stoneware and bricks, and also for cementitious materials. The extrusion can be effected with batch or intermittent plug/cylinder systems ("plug extrusion", or "capillary extrusion"), or with continuous screw/cylinder systems. With the exception of ceramic stoneware, in all the other cases the extrusion is carried out horizontally. In the case of ceramic stoneware, in fact, thanks to the high thicknesses of the pipes in relation to their length (normally two metres), there is a rigidity in the fresh state of the pipes which does not cause deformation or distortion.

As far as the extrusion of cementitious materials is concerned, the known art refers to extruders having two consecutive screws, intervalled by a vacuum chamber to facilitate the pressurized extrusion of pastes. These are extruder models normally used in the brick industry.

Extrudable cementitious compositions for the production of pipes made of cementitious materials are described in US patents 3,857,715 issued in 1974 in the name of C.W. Humphrey, and 5,047,086 issued in 1991 in the name of K. Hayakawa et al.

The US patent 5,658,624 of 1997 in the name of Anderson et al. describes compositions and methods for producing a variety of articles based on extrudable hydraulic cement.

US patent 5,891,374 of 1999 of Shah et al., which describes the extrusion of reinforced-fibre products, is also known.

US patent 6,309,570 of Fellabaum et al. describes a vacuum system for improving the extrusion of cementitious products, without referring however to tubular products.

The extrusion of a reinforced-fibre with a pseudoductile behaviour for the production of low-thickness pipes, is also known from international patent application WO 2005/050079. This international patent application makes reference to a particular extrusion technique previously described in US patent 6,398,998 B1 which does not exploit the screw system for the extrusion phase, but a water suction method from a liquid reinforced-fibre cementitious formulation, introduced under pressure into a kind of coaxial cylinder. After the water extraction, the material is formed at a high pressure, obtaining pipes having a particularly fine thickness with extremely valid mechanical properties, above all in terms of ductility and flexural and crushing strength.

The US patent application 2004/0075185 A1 di Dugat et al. which relates to a plug moulding system of a high performance cementitious material for producing sewage pipes with a medium-high thickness, is also known. The technology described is also known by the name of Tetris or Evolit.

The technologies for the production of pipes made of cementitious material however are not without processing drawbacks.

One of the main problems which arise in production techniques by extrusion of hollow cement-based pipes, is represented by maintaining the circular form (or geometry) at the outlet of the die.

Cementitious materials produced by extrusion have the problem at the outlet of the die of maintaining their form as, due to their weight and low thickness, they bend over themselves and, in the case of pipes, they lose their circular shape.

The lower the thickness of the extruded profile and with high vacuum percentages of the end-product the more significant this technical problem becomes. The "vacuum percentage" refers to the percentage ratio between the empty surface and the full surface of the end-product. The greater this percentage, especially in the presence of large dimensional end-products, the more critical the problem of maintaining the form becomes.

The problem of preserving the form for fibre-cement pipes having a low thickness is further increased by the high market demand for this type of fine piping. A greater vacuum percentage of the pipe section does in fact correspond, with the same nominal diameter, to a greater lightness of the pipe and consequently a lower cost per linear metre of the end-product.

Under normal extrusion process conditions, however, the fine thickness of the pipe can cause a loss in its circularity which, on the other hand, must be guaranteed in the hardened product to allow its final acceptability. In the field of the invention, this characteristic is also defined as the "green strength" of the extruded product, also known as "form stability". This concept is widely described in US patent 5,658,624, mentioned above with reference to the extrusion of pipes.

The possibility of obtaining an adequate green strength of the extruded product is typically related to various composition or process parameters, such as: compactness of the solid components; the low water/solid ratio of the paste also correlated with the mechanical resistance of the material; the extrusion pressure; the possibility of using a heated die; the possibility of using chemical compounds capable of being thermally activated to harden the outgoing material.

It should also be noted that the problem relating to the difficulty of preserving the form does not even allow tubular or box-shaped end-products having an adequate length (at least 2.5 metres) to be obtained.

A further development of the above patent is represented by the process described in US patent 5,545,297 in which a complicated mechanical system for continuous filament winding is introduced downstream of the die, for obtaining pipes with a high resistance and low thicknesses. The winding system also allows more rigid pipes to be obtained which preserve their circular form. The system described however is somewhat complex and expensive and does not adequately solve the problem.

Another document which refers to maintaining the circular form of extruded pipes consists of international patent application WO 2005/050079 A1 in the name of Rocla Pty Ltd. This describes the production of fibre-cement pipes having a low thickness, by means of a particular dewatering extrusion process which comprises eliminating the water from the material during extrusion. The level of the final water/binder ratio is in the order of 0.20, congruent with what is indicated in literature, for obtaining adequate mechanical resistance and therefore, in this case, high performance pipes with a low thickness.

Not even in this case however is the problem of maintaining the form and in particular the circularity after extrusion satisfactorily solved, as in the description it is stated that a substantially constant section of pipe length, not necessarily circular, is accepted.

WO-A-93/20990 discloses a process for the production and form preservation of a hollow neo-extruded end-product made of cementitious material according to the preamble of claim 1.

In the current state of the art, the technical problem of the bending of fibre-cement pipes and more generally hollow end-products with other geometries at the outlet of the extrusion die, which occurs as a result of their weight and fine thickness, has consequently remained unsolved.

One of the objectives of the present invention therefore consists in providing a process for the production of hollow extruded products made of cementitious material which allows to maintain substantially the form of the end-product immediately after the extrusion phase.

A further objective of the present invention consists in providing a process for the production of piping made of cementitious material having a circular section which allows to maintain substantially the form of the end-product immediately after the extrusion phase.

Another objective of the present invention consists in providing a process which allows the production of piping made of fibre-cement with a fine thickness which stably preserves its circular form after extrusion.

A further aspect of the present invention consists in providing a method for preserving, at the outlet of the die, the circular form of the fibre-cement piping produced by extrusion.

In view of the above objectives, according to a first aspect of the invention, a process is provided for the production of piping made of cementitious material having a circular section in accordance with claim 1.

Further accessory characteristics of the process of the invention are indicated in the enclosed dependent claims 2-15.

According to a first aspect of the invention a process is provided for the production and form preservation of a hollow neo-extruded end-product made of cementitious material wherein the hollow neo-extruded end-product is subjected to treatment with microwaves which causes its rapid stiffening allowing its form to be preserved.

"Neo-extruded" end-product refers to the product continuously leaving the die of the extruder without having undergone any cutting phase and therefore still in contact with the extruder die.

"Stiffening" as referred to in the present invention, does not coincide with the final curing phase of the material during which it hardens.

"Hardening" refers to the completion of the hydration process of the cement-based materials reaching the final performances required.

"Stiffening" according to the present invention gives the neo-extruded end-product the physical consistency of lack of ductility and mobility of the material mass, due to the release of water.

The process of the invention is particularly used in the production and form preservation of cementitious end-products having a circular geometry. The end-products with a circular geometry tend to collapse immediately after the extrusion phase and consequently lose their circular form.

An embodiment of the invention envisages the use of a tunnel oven which, installed downstream of the extrusion die, allows the continuous treatment of the neo-extruded end-product causing its stiffening and allowing the form provided by extrusion to be maintained.

According to an embodiment, in the process of the invention the extruded product continues to move, after leaving the extruder die, on a mandrel which guarantees the low friction slipping of the neo-extruded product.

The process of the invention allows the form of the neo-extruded product to be maintained by irradiation with microwaves which causes an acceleration of the hydration reactions of the cement. This effect prevents deformation of the end-product in the period immediately after extrusion.

The use of microwaves is known for the treatment of non-extruded cementitious materials, in order to accelerate the hardening process (US 4,338,138). In this case, the use of microwaves is described for completing the curing of cementitious materials, already partially cured by means of conventional methods (wet, vapour methods and with autoclaving).

US patent 5,245,149 of Pinna and Lai (1993) describes a process which consists in the treatment with microwaves of concrete products in a static chamber, in order to accelerate their forming and hardening process.

Another patent which describes the use of microwaves relates to the rapid forming of panels produced by the pouring of cement-based pastes (US 6,572,811 of W.C. Heirich (2003)).

In the present invention, "treatment with microwaves" refers to the use of electromagnetic waves generally having a frequency ranging from 300 to 300,000 MHz of the electromagnetic spectrum, which correspond to wavelengths varying from 1 to 1000 mm. From a practical point of view, there are only certain frequencies allowed for industrial use. These are called "ISM frequencies" (Industrial, Scientific and Medical) which correspond to the wavelengths indicated in the following Table:

**Table 1**

| frequency, MHz | Wave-length, cm |
|---|---|
| 915 | 32.8 |
| 2450 | 12.2 |
| 5800 | 5.2 |
| 24120 | 1.2 |

The frequency of 2450 MHz is that most commonly used, whereas in some industrial processes the frequency of 915 MHz. is also used. The majority of microwaves are produced by means of wave generators called magnetron.

In some cases, other types of wave generator have been used, called "klystron" or "gyrotron". In any case, the latter two types are only used for very high frequency microwaves (corresponding to wavelengths of less than a centimeter). For higher frequencies (5800 and 24120 MHz) they have so far only been used in extremely rare cases as they are very expensive.

The treatment of cement-based materials with microwaves according to the present invention differ from the known art in that it is applied to hollow neo-extruded products and also because the application is carried out on line in relation to the stiffening phase of the material.

The on-line treatment with microwaves according to an aspect of the invention, can be applied to the extrusion of all geometries of end-products made of cementitious material, to accelerate the production process, especially in cases in which there can be problems relating to form maintenance at the die outlet, such as for example, panels, draw-pieces of various sections, tubular elements.

The capacity of maintaining the form of the neo-extruded product is also particularly appreciated in the production of tubular cement-based end-products as their application in various sectors is restricted by the preservation of the circular geometry.

The process of the invention is therefore particularly suitable for the production, by means of extrusion, of pipes having a circular geometry and fine thickness, typically having a vacuum percentage of the section higher than 60%, preferably higher than 70%. A higher vacuum percentage corresponds, with the same nominal diameter, to a greater lightness of the pipe which, for a same malt in fibre-cement composition, in turn corresponds to a lower cost per linear meter of product, as indicated in Table 2 below.

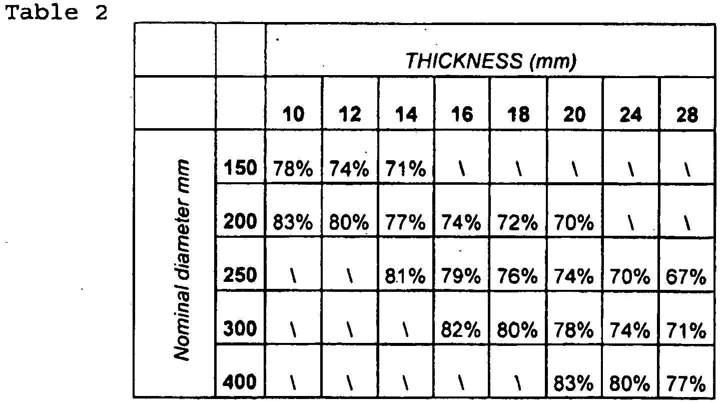

The fine thickness referred to in this case is, for the same internal diameter (called "nominal" for fibre-cement piping), lower than that of a pipe made of reinforced or non-reinforced concrete, of the traditional type, or ceramic stoneware.

This value is very close to that of pipes made of asbestos-cement, no longer in use, which however, on an average, have mechanical performances still higher than those made of fibre-cement without asbestos.

The process of the invention typically allows an end-product having a circular section to be obtained, such as pipes, joints and accessories for gravity systems according to the regulation UNI EN 588-1 and for discharge systems for buildings in accordance with the regulation UNI EN 12763.

The pipes having a circular section obtained with the process of the invention are used in numerous applications sectors, for example in discharge systems, such as sewage disposal, or in drainage systems, and also in pressurized applications or in other types of liquid or gas channelling, at atmospheric operating pressure or slightly higher (for example chimney flues), or as permanent formworks, for the construction of circular pillars or other cylindrical and hollow elements for the building industry.

The end-products obtained with the process of the invention are typically based on cementitious material or fibre-cement, the latter term comprising cement-based materials containing reinforcing fibres of the natural or synthetic type.

In the process of the invention, the dimensioning of the microwave system suitable for obtaining the stiffening of the end-product and also the moving system, is typically effected according to operating requirements.

Advantageously, the use in the process of a tunnel microwave oven allows the controlled heating of the extruded product so as to make it sufficiently rigid in line with the extrusion process.

The neo-extruded product can be typically moved either by the thrust of the extruder or by means of an external pulling or haulage system, as occurs for example in the extrusion of piping made of plastic material. The pulling system is followed by a cutting system of the piping, which, according to an embodiment, is sent to the final curing section.

The characteristics and advantages of an embodiment of the process according to the present invention will appear more evident from the following illustrative and non-limiting description, referring to the enclosed schematic drawings, in which:
figure 1 illustrates an embodiment of the extrusion phase and treatment with microwaves of an end-product having a circular section made of cementitious material according to the invention;
figure 2 is a schematic representation of the form preservation process of an end-product made of cementitious material by means of microwaves according to the invention;
figure 3 illustrates three sections of pipe cut after treatment with microwaves at increasing power values.

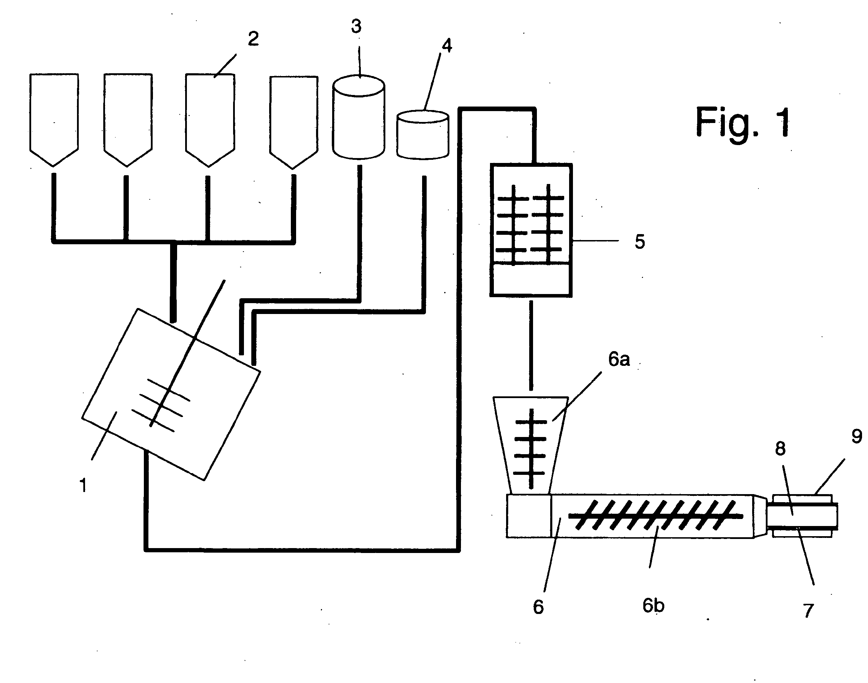

With reference to figure 1, this schematically illustrates the preliminary phases of an embodiment of the process of the invention. In a preliminary phase, a mixer 1 is fed with:
- a solid cement-based component, which typically comprises one or more components selected from cement, sand, aggregates, fillers of a mineral or pozzolanic origin, various types of fibres such as polymeric, glass, carbon fibres and viscosizing additives, stored in a series of hoppers 2, preferably of the gravimetric type,
- water , stored in a hopper for liquids 3,
- additives, conveniently fluidizing agents stored in a separate hopper 4.

The components in solid phase are dosed and then mixed in the mixer 1, conveniently of the intensive type, for a time preferably ranging from 1 to 5 minutes, in relation to the characteristics of the mixer and outside temperature until a homogeneous mixture is obtained. The liquid components, comprising water, are then added, and the mixing is prolonged for a time typically ranging from 1 to 5 minutes again in relation to the characteristics of the mixer and outside temperature.

At the end of the mixing phase the mixture can be in different semi-solid forms varying from wet powder to small pellets or in the form of a paste. The system thus obtained is preferably collected in an intermediate collection box, before being sent by transporting means to a pasting machine or homogenizing mixer 5.

According to an embodiment, the semi-fluid system obtained in the form of a paste is collected in a box and sent on belts for feeding an extruder 6. The extruder is preferably of the twin-screw type in series, for example of the type produced by the company Haendle. The twin-screw extruder is equipped for example with two screws arranged orthogonally with respect to each other, of which the second screw 6b, which is horizontal, typically having a diameter of 350 mm, is suitable for compacting the material also a high pressures. Said extruder is particularly suitable for high viscosity materials and which produce considerable friction as cementitious materials. The first screw, 6a, which is vertical, is used for the loading of the material, the second horizontally 6b for the actual drawing phase and, in correspondence with the draw-plate, a typical maximum internal pressure of 50 bars can be reached, preferably about 40 bars; between the two areas, there is a chamber for creating a vacuum in order to obtain the maximum compacting of the material for a good surface finishing of the end-product.

The extrusion phase is preferably effected under controlled temperature conditions, typically below room temperature, by means of a cooling system, to ensure a good processability of the pastes thus slowing down the hydration kinetics of the cement.

Under these conditions (diameter of the second screw 350 mm) it is possible for example to extrude pipes having an internal diameter, for pipes made of fibre-cement called nominal diameter (ND) according to UNI EN 588-1 and UNI EN 12763 ranging from 150 mm to 350 mm, a thickness ranging from 10 to 22 mm and a length varying from 1 to 5 metres.

Typically, the pipe 7 leaving the extrusion die continues to move on a mould or mandrel 8, conveniently fixed onto the inner buffer of the extruder die passing through a tunnel microwave oven 9.

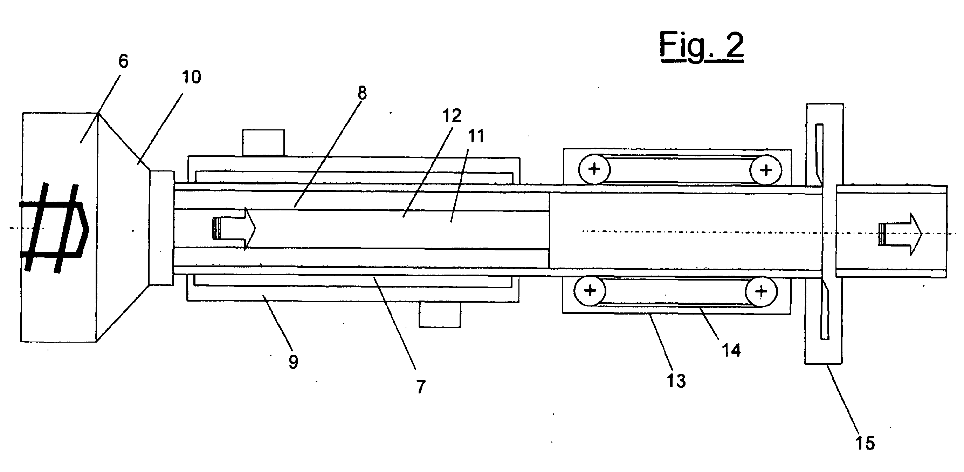

The oven 9 is described in detail in figure 2.

With reference to figure 2, the cementitious end-product, coming from a die 10 of a specific extruder 6 which is in the form of a piping having a circular section, is subjected to a rapid stiffening phase by irradiation with microwaves.

For this purpose, the neo-extruded product 7 is passed onto a mandrel 8 and irradiated with microwaves generated by an appropriate source, such as for example a microwave oven 9 in the form of a tunnel.

The applied power of the microwave oven according to an aspect of the present invention varies from 0.1 to 60 KW, referring to a frequency of 2450 MHz. Upon changing the reference frequency to 915 MHz, the applied power decreases as the greater the penetration capacity of the microwaves, the greater is the efficacy of the heating.

The mandrel 8, in particular, comprises an internal metal core 11 which guarantees the correct mechanical rigidity, and an outer coating 12 made of plastic material transparent to microwaves, typically polypropylene or polytetrafluoroethylene (Teflon). The materials forming the coating i2 must also be capable of facilitating the sliding of the pipe during the stiffening phase inside the oven 9.

The mandrel 8 must have an outer diameter lower than the internal diameter of the extruded pipe to avoid friction phenomena during the sliding phase. In particular, the outer diameter of the mandrel 8 has lower dimensions ranging from 0.5 to 5% with respect to the internal diameter of the pipe, more preferably lower than 1-2%.

The neo-extruded cementitious end-product 7 moves between the various process phases thanks to the cooperation between the thrust of the extruder and that generated by a specific external pulling system 13.

According to an advantageous aspect of the present invention, the neo-extruded end-product is moved from the system 13 at a rate ranging from 0.5 - 5 metres/minute, preferably from 0.7-3 metres/minute, even more preferably 1 metre/minute.

The pulling system 13, as can be seen in figure 2, is situated downstream of the microwave oven and consists of a series of conveyor belts 14 in a number and with dimensions in relation to the diameter of the neo-extruded piping, positioned in contact on two sides with the cementitious end-product.

Downstream of the pulling system 13, the neo-extruded cementitious end-product is cut by means of a suitable system 15 obtaining pipes having a length varying in relation to the final specifications of the end-product.

Once the desired length has been reached, the neo-extruded pipe is cut and sent to a final curing cycle for example by treatment with water at room temperature or heated, or for treatment in static climatic chambers and/or in tunnels on line with controlled temperature (maximum 50°C) and humidity conditions. The pipe is subsequently sent to the final storage phase.

The following examples are provided for purely illustrative purposes of the present invention and should not be considered as limiting its protection scope, as indicated in the enclosed claims.

### Example 1

Piping made of fibre-reinforced cementitious material with a low thickness was obtained by extrusion and subsequent microwave treatment of the piping in the fresh state, so that it can be sent to the subsequent curing phase.

A fibre-reinforced cementitious formulation is used for the production of a piping having a nominal diameter DN 200 (internal diameter 200 mm, thickness 11 mm).

The extrusion is effected using a Haendle extruder model E56a/40 at whose end a die with an annular section is assembled. The pipe made of cementitious material is extruded at an advance rate of 1 metre/minute and, once it has left the die, it continues to move on a coaxial tubular core made of a mixed material, internally of metal (steel), externally coated with plastic transparent to microwaves (polypropylene) with an outer diameter 2% lower than the internal diameter of the cement pipe. The core is wedge-fixed to the internal buffer of the die. Considering the volume mass in the fresh state (about 2300 kg/m³) and the extrusion rate (1 metre/minute), the mass flow-rate of the product is equal to about 16 kg/minute.

In order to effect the microwave treatment of the pipe with the above dimensions, a total power of 36 KW was installed.

For this purpose, applicators of the "horn" type are installed on the tunnel in a suitable position (alternatively, applicators of the irradiating slot type can be installed) which irradiate their energy on an annular section corresponding to that of the neo-extruded pipe, thus optimizing the energy necessary for the hardening. The magnetrons used for the production of energy with microwaves are thermo-regulated with a cooling system. The total length of the tunnel - where the treatment takes place - is 750 mm. The whole system is designed so that there is no dispersion of microwaves outside, for the safety of the operators. In particular, the tunnel is produced with a final area which absorbs and provides protection from the possible leakage of microwaves. The microwave treatment allows a controlled heating of the mass, in temperature and section, thanks to its action on the free water present. Hot and humid air circulation can also be effected in the tunnel to allow a more homogeneous treatment on the surface.

At the end of the microwave tunnel, the internal core sustaining the pipe, which at this point is hardened, also terminates.

The extruded piping moves both as a result of the thrust of the extruder and also due to the presence of a haulage system which is installed downstream of the microwave system, which advances with a synchronized rate with respect to the extrusion rate, so as not to create tears, slits or undulations in the product; the haulage system can be appropriately designed so as to operate in depression, in order to maintain the circular form of the pipe and can also be suitably thermo-regulated.

After the haulage system, the pipe is subjected to cutting and then sent to the subsequent curing section, which can be effected with a hot humid air or vapour system or with autoclaving.

Following the microwave treatment, an adequate stiffening of the material was verified with a calculated energy consumption equal to about 1 kW per 0.66 kg/minute of product (corresponding to about 24 kW absorbed for the extrusion rate equal to 1 metre/minute). A water mass loss equal to 1% by weight was estimated without the formation of any defects (slits and breakages).

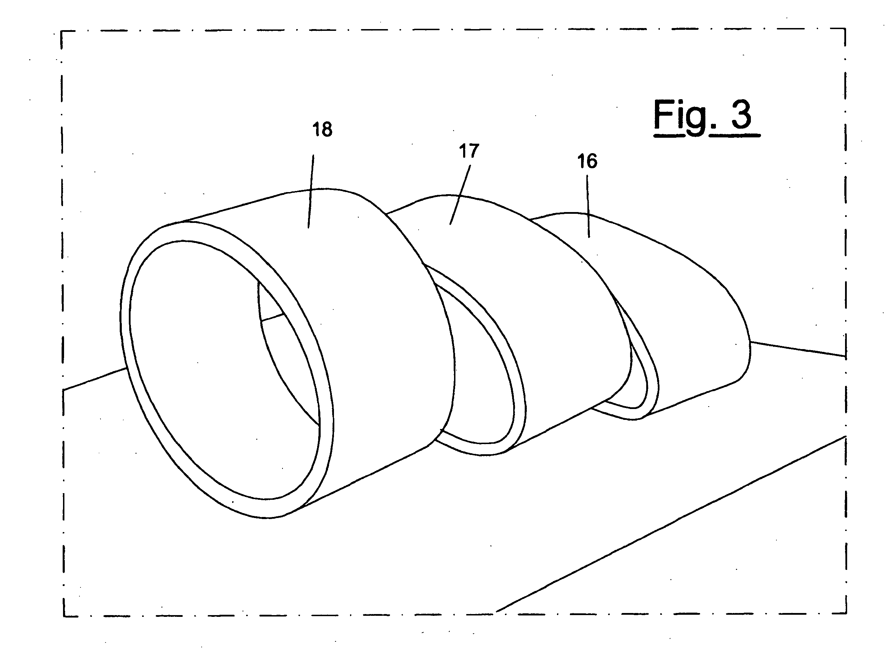

Figure 3, shows, from right to left, three sections of pipe cut immediately after being treated with microwaves at increasing treatment powers: nr. 1 corresponding to about 8 kW of absorbed energy, nr. 2 corresponding to about 16 kW of absorbed power, nr. 3 corresponding to 24 kW of absorbed energy.

### Example 2

A test was carried out substantially following the same conditions as Example 1, but with a test rate equal to 2 metres/minute. 2 microwave tunnel modules were used for an overall length of 1500 mm for a total installed power of 72 KW.

In this case, the absolute absorbed power, necessary for obtaining the adequate stiffening of the end-product, proved to be about 48 kW.

### Example 3

Another test was carried out on neo-extruded chimney flues having a box-shaped section (outer side 20 mm and thickness 10 mm). In particular, a microwave oven equipped with a hot air generation system was used for the stiffening. In particular the power was distributed as 20% of power generated with microwaves and 80% of energy generated with hot air. In this way, equivalent results were obtained, in terms of stiffening of the end-product, significantly reducing the installed electric power required for the microwaves. By using, as in Example 1, the extrusion rate of 1 metre/minute, a microwave consumption of 5 KW and of hot air of about 20 KW, was calculated.

## Claims

1. A process for the production and form preservation of a hollow neo-extruded end-product (7) made of cementitious material comprising a rapid hardening phase of the hollow neo-extruded end-product (7) made of cementitious material, **characterized in that** said rapid hardening phase comprises an irradiation of the hollow neoextruded end-product (7) with microwaves, in order to stiffen it so that its form is preserved, followed by a final curing phase to complete the hydration of the hollow neo-extruded end-product (7), said irradiation taking place by passage of the hollow neo-extruded end-product (7) in a microwave oven with a power ranging from 0,1 to 60 KW.

2. The process according to claim 1, **characterized in that** at least a portion of said hollow neo-extruded end-product (7) is passed on a mandrel (8) and irradiated with microwaves.

3. The process according to claims 1 or 2, **characterized in that** said irradiation of the hollow neoextruded end-product (7) is effected inside a tunnel-shaped microwave oven (9) through which said neo-extruded end-product (7) passes.

4. The process according to any of the claims 1-3, **characterized in that** said irradiation is effected with microwaves with a power ranging from 3 to 36 KW at preferable frequency of 2450 Mhz.

5. The process according to any of the claims 1-4, **characterized in that** said hollow neo-extruded end-product (7) is moved at a rate ranging from 1 - 2 metres/minute by means of an external pulling system (13).

6. The process according to claim 5, **characterized in that** said external pulling system (13) comprises a series of sliding rolls.

7. The process according to any of the claims 1-6, **characterized in that** said hollow neo-extruded end-product (7) is a piping having a circular section.

8. The process according to claim 7, **characterized in that** said piping having a circular section is equipped with a vacuum percentage of the section higher than 60%.

9. The process according to claim 8, **characterized in that** said vacuum percentage of the section is higher than 70%.

10. The process according to any of the claims 1-9, **characterized in that** said hollow neo-extruded end-product (7) is made of fibre-cement.

11. The process according to any of the claims 1-10, **characterized in that** it also comprises a cutting phase of the hollow neo-extruded end-product (7).

12. The process according to claim 11, **characterized in that** it comprises a curing phase of the cut hollow neo-extruded end-product.

13. A process for the production of a hollow end-product made of cementitious material comprising:
- a mixing phase of a cement-based mixture with water to give a wet cement-based powder;
- a homogenization phase of said wet powder in a pasting machine to form a cement-based paste suitable for extrusion;
- an extrusion phase of said cement-based paste in an extruder (6) to provide a cement-based hollow end-product (7), followed by the process of form preservation of the hollow neo-extruded end-product according to claim 1, wherein after an irradiation with microwaves the hollow neo-extruded end product (7) is cut before being sent to a final curing phase.

14. The process according to claim 13, **characterized in that** said irradiation phase is effected by passing said hollow end-product (7) inside a microwave oven (9) situated close to said extruderr (6).

15. The process according to claim 13 or 14, **characterized in that** said hollow neo-extruded end-product (7) is a piping made of cementitious material.

## Patentansprüche

1. Verfahren für die Erzeugung und Formerhaltung eines hohlen neoextrudierten Endprodukts (7) aus zementgebundenem Material, umfassend eine Schnellhärtungsphase des hohlen neoextrudierten Endprodukts (7) aus zementgebundenem Material, **dadurch gekennzeichnet, dass** die genannte Schnellhärtungsphase eine Bestrahlung des hohlen neoextrudierten Endprodukts (7) mit Mikrowellen, um es zu versteifen, so dass seine Form erhalten bleibt, gefolgt von einer Endaushärtungsphase zum Abschließen des Abbindens des hohlen neoextrudierten Endprodukts (7) umfasst, wobei die genannte Bestrahlung durch Bewegen des hohlen neoextrudierten Endprodukts (7) in einem Mikrowellenofen mit einer Leistung im Bereich von 0,1 bis 60 kW stattfindet.

2. Verfahren nach Anspruch 1, **dadurch gekennzeichnet, dass** mindestens ein Abschnitt des genannten hohlen neoextrudierten Endprodukts (7) auf einen Dorn (8) bewegt und mit Mikrowellen bestrahlt wird.

3. Verfahren nach Anspruch 1 oder 2, **dadurch gekennzeichnet, dass** die genannte Bestrahlung des hohlen neoextrudierten Endprodukts (7) in einem tunnelförmigen Mikrowellenofen (9) bewirkt wird, durch den sich das genannte neoextrudierte Endprodukt (7) bewegt.

4. Verfahren nach einem der Ansprüche 1-3, **dadurch gekennzeichnet, dass** die genannte Bestrahlung mit Mikrowellen mit einer Leistung im Bereich von 3 bis 36 kW bei einer bevorzugten Frequenz von 2450 MHz bewirkt wird.

5. Verfahren nach einem der Ansprüche 1-4, **dadurch gekennzeichnet, dass** das genannte hohle neoextrudierte Endprodukt (7) mittels eines externen Zugsystems (13) mit einer Geschwindigkeit im Bereich von 1-2 Metern/Minute bewegt wird.

6. Verfahren nach Anspruch 5, **dadurch gekennzeichnet, dass** das genannte externe Zugsystem (13) eine Reihe von Gleitrollen umfasst.

7. Verfahren nach einem der Ansprüche 1-6, **dadurch gekennzeichnet, dass** es sich bei dem genannten hohlen neoextrudierten Endprodukt (7) um ein Rohr mit einem kreisförmigen Querschnitt handelt.

8. Verfahren nach Anspruch 7, **dadurch gekennzeichnet, dass** das genannte Rohr mit einem kreisförmigen Querschnitt mit einem Leeranteil des Querschnitts von höher als 60% ausgestattet ist.

9. Verfahren nach Anspruch 8, **dadurch gekennzeichnet, dass** der genannte Leeranteil des Querschnitts größer ist als 70%.

10. Verfahren nach einem der Ansprüche 1-9, **dadurch gekennzeichnet, dass** das genannte hohle neoextrudierte Endprodukt (7) aus Faserzement besteht.

11. Verfahren nach einem der Ansprüche 1-10, **dadurch gekennzeichnet, dass** es außerdem eine Schneidphase des hohlen neoextrudierten Endprodukts (7) umfasst.

12. Verfahren nach Anspruch 11, **dadurch gekennzeichnet, dass** es eine Aushärtphase des geschnittenen hohlen neoextrudierten Endprodukts umfasst.

13. Verfahren für die Erzeugung eines hohlen Endprodukts aus zementgebundenem Material, umfassend:
- eine Mischphase eines zementbasierten Gemischs mit Wasser, um ein nasses zementbasiertes Pulver zu erhalten;
- eine Homogenisierungsphase des genannten nassen Pulvers in einer Pastenmaschine, um eine für die Extrusion geeignete zementbasierte Paste zu bilden;
- eine Extrusionsphase der genannten zementbasierten Paste in einem Extruder (6), um ein zementbasiertes hohles Endprodukt (7) bereitzustellen, gefolgt von dem Verfahren der Formerhaltung des hohlen neoextrudierten Endprodukts nach Anspruch 1, wobei das hohle neoextrudierte Endprodukt (7) nach einer Bestrahlung mit Mikrowellen geschnitten wird, bevor es zu einer Endaushärtungsphase geschickt wird.

14. Verfahren nach Anspruch 13, **dadurch gekennzeichnet, dass** die genannte Bestrahlungsphase durch Bewegen des genannten hohlen Endprodukts (7) in einem Mikrowellenofen (9) bewirkt wird, der sich nah bei dem genannten Extruder (6) befindet.

15. Verfahren nach Anspruch 13 oder 14, **dadurch gekennzeichnet, dass** es sich bei dem genannten hohlen neoextrudierten Endprodukt (7) um ein Rohr aus zementgebundenem Material handelt.

## Revendications

1. Procédé de production et de conservation de forme d'un produit fini creux néo-extrudé (7) constitué d'un matériau cimentaire, comprenant une phase de durcissement rapide du produit fini creux néo-extrudé (7) constitué de matériau cimentaire, **caractérisé en ce que** ladite phase de durcissement rapide comprend une irradiation du produit fini creux néo-extrudé (7) avec des micro-ondes, pour le solidifier de sorte que sa forme soit conservée, ladite phase étant suivie d'une phase de cure finale pour compléter l'hydratation du produit final creux néo-extrudé (7), ladite irradiation se faisant par passage du produit final creux néo-extrudé (7) dans un four à micro-ondes d'une puissance allant de 0,1 à 60 kW.

2. Procédé selon la revendication 1, **caractérisé en ce qu'**au moins une partie dudit produit fini creux néo-extrudé (7) est enfilée sur un mandrin (8) et irradiée avec des micro-ondes.

3. Procédé selon la revendication 1 ou la revendication 2, **caractérisé en ce que** ladite irradiation du produit fini creux néo-extrudé (7) est effectuée à l'intérieur d'un four à micro-ondes (9) en forme de tunnel, à travers lequel ledit produit fini néo-extrudé (7) passe.

4. Procédé selon l'une quelconque des revendications 1 à 3, **caractérisé en ce que** ladite irradiation est effectuée avec des micro-ondes d'une puissance allant de 3 à 36 kW à une fréquence préférable de 2450 Mhz.

5. Procédé selon l'une quelconque des revendications 1 à 4, **caractérisé en ce que** ledit produit fini creux néo-extrudé (7) est déplacé à une vitesse de 1 à 2 m/min au moyen d'un système de traction externe (13).

6. Procédé selon la revendication 5, **caractérisé en ce que** ledit système de traction externe (13) comprend une série de rouleaux coulissants.

7. Procédé selon l'une quelconque des revendications 1 à 6, **caractérisé en ce que** ledit produit fini creux néo-extrudé (7) est une canalisation ayant une section circulaire.

8. Procédé selon la revendication 7, **caractérisé en ce que** ladite canalisation ayant une section circulaire est équipée avec un pourcentage de vide de la section supérieur à 60 %.

9. Procédé selon la revendication 8, **caractérisé en ce que** ledit pourcentage de vide de la section est supérieur à 70 %.

10. Procédé selon l'une quelconque des revendications 1 à 9, **caractérisé en ce que** ledit produit fini creux néo-extrudé (7) est constitué de fibrociment.

11. Procédé selon l'une quelconque des revendications 1 à 10, **caractérisé en ce qu'**il comprend également une phase de coupe du produit fini creux néo-extrudé (7).

12. Procédé selon la revendication 11, **caractérisé en ce qu'**il comprend une phase de cure du produit fini creux néo-extrudé coupé.

13. Procédé de production d'un produit fini creux constitué d'un matériau cimentaire, comprenant :
- une phase de malaxage d'un mélange à base de ciment avec de l'eau pour donner une poudre humide à base de ciment ;
- une phase d'homogénéisation de ladite poudre humide dans une machine à pâte pour former une pâte à base de ciment convenant à l'extrusion ;
- une phase d'extrusion de ladite pâte à base de ciment dans une extrudeuse (6) pour fournir un produit fini creux (7) à base de ciment, ladite phase étant suivie du procédé de conservation de forme du produit fini creux néo-extrudé selon la revendication 1, dans lequel, après irradiation avec des micro-ondes, le produit fini creux néo-extrudé (7) est coupé avant d'être envoyé à une phase de cure finale.

14. Procédé selon la revendication 13, **caractérisé en ce que** ladite phase d'irradiation est effectuée en faisant passer ledit produit fini creux (7) à l'intérieur d'un four à micro-ondes (9) situé à proximité de ladite extrudeuse (6).

15. Procédé selon la revendication 13 ou 14, **caractérisé en ce que** ledit produit creux néo-extrudé est une canalisation constituée d'un matériau cimentaire.
